# EUROPÄISCHE PATENTANMELDUNG

(11) **EP 0 995 577 A1**
(43) Veröffentlichungstag der Anmeldung: **26.04.2000**
(21) Anmeldenummer: 99119838.3
(22) Anmeldetag: 07.10.1999
(51) Int. Cl.: B29C 45/56, B29C 37/00, B60R 21/20

(54) **Spritzprägen von Airbagabdeckungen**

(30) Priorität: 21.10.1998 DE 19848463
(71) Anmelder: Ticona GmbH, 65451 Kelsterbach (DE)
(72) Erfinder: Reil, Frank, 64579 Gernsheim (DE)

(57) **Zusammenfassung**

Die Erfindung betrifft ein Verfahren zum Herstellen von Airbagabdeckungen mit Aufreisslinie. Unter Anwendung des Spritzprägeverfahrens wobei zunächst das zu verarbeitende thermoplastische Elastomermaterial (K) in einem Plastifizieraggregat (5) schonend plastifiziert, dann das plastifizierte Elastomermaterial in eine geöffnete Kavität (6) eingespritzt und die geöffnete Kavität (6) geschlossen wird, wobei durch die vorgegebene Schließkraft und Schließgeschwindigkeit des Werkzeuges ein Prägedruck erzeugt wird. Nach Abkühlen wird die Kavität (6) wieder geöffnet und die fertige Airbagabdeckung entnommen, die sich dadurch auszeichnet, dass der Verlauf der Aufreisslinie an der Oberseite der Airbagabdeckung, die dem Fahrgastinnenraum zugewandt ist, optisch nicht erkennbar ist.

## Beschreibung

Die vorliegende Erfindung betrifft ein Verfahren zum Herstellen von Airbagabdeckungen, mit dem sich das optische Aussehen der damit hergestellten Airbagabdeckungen verbessern läßt, und danach hergestellte Airbagabdeckungen.

Der Sicherheit der Insassen in Kraftfahrzeugen dienende Airbags werden normalerweise hinter Abdeckungen aus thermoplastischen Elastomeren angeordnet, um sie vor Verschmutzung oder mechanische Beschädigung zu schützen. Man unterscheidet bei den Abdeckungen zwischen (1) Einkomponentenabdeckungen, das sind Formteile aus einem einzigen Kunststoffmaterial, die normalerweise nach dem Spritzgußverfahren hergestellt werden, und (2) Zweikomponentenabdeckungen, bei denen auf ein zunächst vorgefertigtes Trägermaterial in einem zweiten Fertigungsschritt ein zweites Material nach dem sogenannten Zweikomponenten-Spritzgußverfahren auf- oder angespritzt wird. Durch das Aufbringen des zweiten Materials wird sichergestellt, dass Oberflächenmarkierungen wie Glanzstellen oder ähnliches, die auf dem vorgefertigen Trägermaterial noch sichtbar vorhanden sind und durch die den Fahrzeuginsassen der Eindruck minderer Qualität bewirkt würde, an der fertigen Airbagabdeckung nicht mehr in Erscheinung treten.

Normalerweise sind die herkömmlichen Airbagabdeckungen mit einer Aufreisslinie ausgestattet, die als Dünnstelle ausgebildet ist. Üblicherweise handelt es sich dabei um eine rillenförmige Vertiefung auf der dem Fahrgastraum abgewandten Innenseite der Airbagabdeckung. Die Aufreißlinie kann aber auch durch eine lokale Verringerung der Formteildicke gebildet werden. Durch die Aufreisslinie soll sichergestellt werden, dass die Airbagabdeckung im Notfall durch den sich aufblasenden Airbag wirklich aufgerissen wird, während der Airbag seinen bestimmungsgemäßen Einsatzzweck erfüllt.

Im Zuge der Kostendämpfung bei Airbagsystemen kommt man in der Praxis immer mehr von den teuren Zweikomponentenabdeckungen ab und favorisiert zunehmend die wesentlich preisgünstiger herstellbaren Einkomponentenabdeckungen. Diese werden üblicherweise nach dem Spritzgießverfahren hergestellt (DE 44 20 829 A1 und US 5,762,983) und haben den Nachteil, dass die notwendigerweise als Dünnstelle ausgebildete Aufreisslinie an dem fertigen Bauteil optisch in Erscheinung tritt. In der Regel ist dabei mit bloßem Auge eine Matt- oder Glanzstelle erkennbar. Der Grund dafür sind in erster Linie die Druckverhältnisse im Herstellwerkzeug.

Als Folge der geringen Schichtdicke des Bauteils im Bereich der Aufreisslinie ist der für die Werkstoffkontaktzeit und den Werkstoffkontaktdruck verantwortliche Innendruck der Kunststoffschmelze im Bereich der Aufreisslinie sehr viel geringer, verglichen mit dem Innendruck in den unmittelbar benachbarten Bauteilbereichen größerer Schichtdicke. Infolge des geringeren Innendrucks der Schmelze ist das Kunststoffmaterial im Bereich der Aufreisslinie einem anderen Temperatur/Zeit-Erlebnis unterworfen. Das bedeutet, dass das Kunststoffmaterial von der Werzeugoberfläche wegschwinden kann, ohne dass diese Volumenkontraktion durch nachdringendes Material aus Bereichen größerer Schichtdicke ausgeglichen werden kann. Die Folge davon ist ein unterschiedlicher Oberflächenglanz entlang der Aufreisslinie und in den angussfernen Bereichen des Bauteils.

Aufgabe der vorliegenden Erfindung war es deshalb, ein Verfahren zu finden, nach dem sich Airbagabdeckungen für Kraftfahrzeuge mit Aufreisslinie so als Einkomponentenabdeckung herstellen lassen, dass der Verlauf der Aufreisslinie auf der Oberseite der Abdeckung, die dem Fahrgastinnenraum zugewandt ist, optisch nicht in Erscheinung tritt, und das zusätzlich auch noch großtechnisch einfach und kostengünstig durchführbar ist.

Gelöst wird diese Aufgabe erfindungsgemäß dadurch, dass die Airbagabdeckungen nach einem Spritzprägeverfahren hergestellt werden, bei dem der Druck der Kunststoffschmelze gleichmäßig und schichtdickenunabhängig über die gesamte Airbagabdeckung hinweg verteilt wird, dessen Kennzeichenmerkmale darin zu sehen sind, dass zunächst der zu verarbeitende thermoplastische Kunststoff in einem Plastifizieraggregat schonend plastifiziert wird, der plastifizierte Kunststoff in eine geöffnete Kavität eingespritzt wird, die geöffnete Kavität geschlossen wird, wobei durch die vorgegebene Schließkraft und Schließgeschwindigkeit des Werkzeuges ein Prägedruck erzeugt wird, und nach Abkühlen die Kavität wieder geöffnet und die fertige Airbagabdeckung entnommen wird.

Obwohl beispielsweise aus Kunststoffe 80 (1990) Heft 5, Seiten 583-587 bekannt ist, daß sich das Spritzprägen zum Herstellen dünnwandiger Formteile aus thermoplastischen Kunststoffen, auch solcher mit unterschiedlicher Wanddickenverteilung, geeignet ist, war es für den Fachmann dennoch überraschend, daß mit diesem Verfahren das genannte Problem gelöst werden konnte.

Beim Spritzprägeverfahren wird nach einer kurzen auf das Einspritzen des Kunststoffs in die Kavität folgenden Prägeverzögerungszeit, in der die Molekülorientierungen im Kunststoff relaxieren können, der Formhohlraum rasch verkleinert, wobei der Kunststoff in der Kavität verteilt wird, und unter hohem Druck komprimiert und anschließend isochor, d.h. bei gleichem (spezifischen) Volumen abgekühlt. Für den Fachmann, dem bereits vom Spritzgießverfahren bekannt ist, daß unterschiedlich dicke Kunststoffschichten während der Abkühlung unterschiedlichen Temperatur/Zeit-Erlebnissen unterworfen werden, wobei sich gerade das zu lösende Problem stellt (optische Erkennbarkeit der Aufreißlinie auf der Oberseite der Airbagabdeckung), war daher nicht ersichtlich, daß sich dieses Problem nach dem Spritzprägeverfahren nicht stellt. Vielmehr mußte er nach seiner Erfahrung damit rechnen, daß sich das Problem hier genauso stellt wie beim Spritzgießverfahren.

Entgegen dieser Erfahrung wurde nun überraschend festgestellt, daß bei der Herstellung von Airbagabdeckungen mit Aufreißlinie nach dem Spritzprägeverfahren die bisher in der Praxis bemängelten Unterschiede im Oberflächenglanz an der Oberfläche der Airbagabdeckungen vermieden werden können.

Die Erfindung betrifft daher ein Verfahren zum Herstellen von Airbagabdeckungen mit Aufreisslinie bei dem der Druck der Kunststoffschmelze gleichmäßig und schichtdickenunabhängig über die gesamte Airbagabdeckung hinweg verteilt wird, dadurch gekennzeichnet, dass zunächst der zu verarbeitende thermoplastische Kunststoff in einem Plastifizieraggregat schonend plastifiziert wird, dass der plastifizierte Kunststoff dann in eine geöffnete Kavität eingespritzt wird, dass dann die geöffnete Kavität geschlossen wird, wobei durch die vorgegebene Schließkraft und Schließgeschwindigkeit des Werkzeuges ein Prägedruck erzeugt wird, und dass nach Abkühlen die Kavität wieder geöffnet und die fertige Airbagabdeckung entnommen wird, wobei der Verlauf der Aufreisslinie auf der Oberseite der Airbagabdeckung, die dem Fahrgastraum zugewandt ist, optisch nicht erkennbar ist.

Gegenstand der Erfindung sind auch nach dem Spritzprägeverfahren hergestellte Airbagabdeckungen mit Aufreisslinie, wobei der Verlauf der Aufreisslinie auf der Oberseite der Airbagabdeckung optisch nicht erkennbar ist, sowie die Verwendung des Spritzprägeverfahrens zur Herstellung von Airbagabdeckungen mit Aufreisslinie.

Das erfindungsgemäße Verfahren gewährleistet, dass der Nachdruck der Kunststoffschmelze, der verantwortlich ist für den Ausgleich der Volumenkontraktion des erstarrenden Kunststoffmaterials, über die Schliesshydraulik des Werkzeuges aufgebracht wird und damit unabhängig ist vom Fließweg der Kunststoffschmelze und von der jeweiligen Schichtdicke des Bauteils. Überraschend hat sich gezeigt, dass nach dem erfindungsgemäßen Verfahren des Spritzprägens Unterschiede im Oberflächenglanz an den Stellen geringerer Schichtdicke, insbesondere im Bereich der Aufreisslinie, wirksam und zuverlässig vermieden werden. Darüber hinaus wurden überraschend die Einfallstellen im Bereich der dickwandigen Anbindung des Unterteils zur Oberfläche vermieden.

Ein weiterer Vorteil des erfindungsgemäßen Verfahrens besteht darin, dass sich der Kunststoff in der geöffneten Kavität ungehindert verteilen kann. Demgegenüber muß beim Spritzgußverfahren der Kunststoff in der den Ausmassen des herzustellenden Formteils angepaßten Kavität die als Fließbremse wirkende Dünnstelle (Aufreisslinie) überwinden, wobei unvorteilhafte hohe Scherkräfte auf den Kunststoff, d.h. insbesondere auf die Polymerketten, einwirken und unter Umständen auch unerwünschte Entmischungsphänomene auftreten können.

Im Rahmen der vorliegenden Erfindung soll unter dem Begriff Kavität ein mit thermostabilem Material, z.B. Metall oder Keramik, ummantelter Hohlraum zu verstehen sein, der in geschlossenem Zustand des Werkzeugs in seiner geometrischen Ausgestaltung die spätere Form der erfindungsgemäß herzustellenden Airbagabdeckung vorgibt. Die Kavität ist vorzugsweise von aussen mit einem Kühlmedium zu kühlen, damit bei der Massenfertigung möglichst schnelle Taktzeiten eingehalten werden können.

Als geeignete Kunststoffmaterialien für Airbagabdeckungen, die nach dem erfindungsgemäßen Verfahren hergestellt werden, haben sich thermoplastische Elastomere auf Basis von Polyestern (TPE-E), von Polyolefinen (TPE-O), von Polystyrol (TPE-S) von Polyurethan (TPE-U) oder solche auf Basis von Vinylchlorid oder Polyamid erwiesen. Diese können einzeln oder in verträglichen Mischungen untereinander oder zu anderen Kunststoffen verwendet werden. Die Elastomere können wahlweise auch eine Vielzahl von Additiven wie Flammschutzmittel, Antioxidans, antistatisches Material, Färbemittel, Weichmacher und Licht- bzw. UV-Absorptionsmittel beinhalten.

Es kann auch vorteilhaft sein, das Elastomer mit bis zu 50 Vol.-% Füllstoff, insbesondere leichtem Füllstoff, wie in der deutschen Patentanmeldung DE 44 20 829 A1 beschrieben, die durch Bezugnahme hierin eingeschlossen ist, zu mischen.

Als besonderer Vorteil des erfindungsgemäßen Spritzprägeverfahrens hat sich überraschend gezeigt, dass die Orientierung der Polymerketten weitaus schonender und gleichmäßiger als nach herkömmlichen Herstellungsverfahren bewerkstelligt wird und dass es in den so hergestellten Airbagabdeckungen für die Fachwelt überraschend nicht zu thermisch bedingten Verzugserscheinungen kommt.

Die Erfindung soll im folgenden anhand einer Zeichnung und danach durch ein Ausführungsbeispiel näher beschrieben werden, ohne auf die konkret dargestellte Ausführungsform beschränkt zu sein. Die dargestellte Ausführungsform, bei der sich Auswerfer und Anspritzung auf der gleichen Seite, nämlich der Spritzseite, befinden, stellt jedoch eine bevorzugte Ausführungsform dar, da sie besonders vorteilhaft ist.

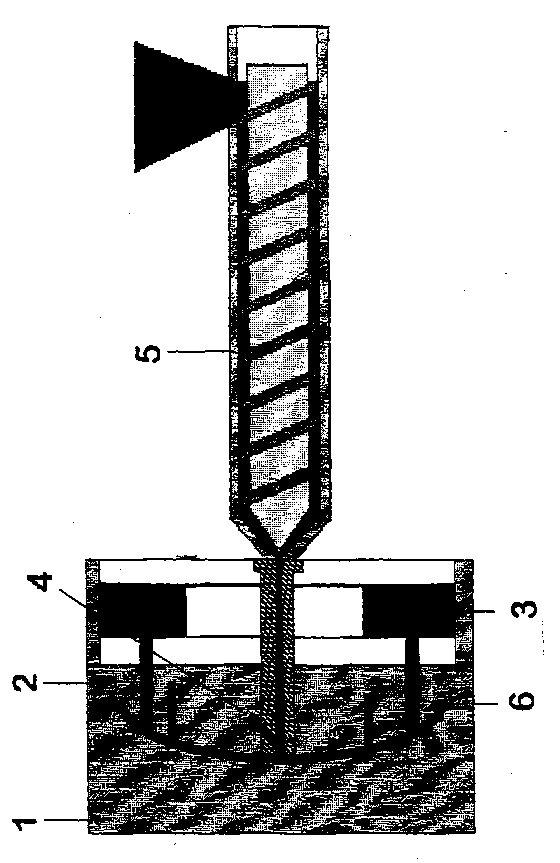

Die einzige Figur zeigt eine schematische Darstellung einer Werkzeuganordnung, mit der das erfindungsgemäße Verfahren vorteilhaft durchzuführen ist.

Mit Bezugszeichen ist dargestellt, wie das Elastomermaterial K einer röhrenförmigen Plastifiziereinheit 5 zugeführt wird, in deren Innerem eine drehbare Schnecke angeordnet ist. Am Ende der Plastifiziereinheit 5 schließt sich ein Spritzgießwerkzeug an, das eine bewegliche Werkzeughälfte 1 und eine spritzseitige, nicht bewegliche Werkzeughälfte 2 umfasst. Die bewegliche Werkzeughälfte 1 und die nicht bewegliche Werkzeughälfte 2 sind über eine nicht dargestellte Bewegungshydraulik miteinander verbunden, mit der sich die im Innern des Spritzgießwerkzeuges befindliche Kavität 6 in Form der fertigen Airbagabdeckung öffnen und schließen läßt. Das Elastomermaterial K gelangt erfindungsgemäß aus der Plastifiziereinheit 5 vorbei an einem Verschlußschieber 4 in die geöffnete Kavität 6 und breitet sich darin aus. Wenn der Verschlußschieber 4 geschlossen wird, schließt sich auch die Kavität 4 durch eine Horizontalbewegung der beweglichen Werkzeughälfte 1. Das Elastomermaterial K verbleibt in der Kavität 6 und erstarrt dort durch Abkühlen. Nach dem Abkühlen wird die Kavität 6 durch eine rückwärts gerichtete Horizontalbewegung der beweglichen Werkzeughälfte 1 geöffnet und die fertige Airbagabdeckung wird durch eine kurze Bewegung des düsenseitig angeordneten Auswerferpaketes 3 aus der Kavität 6 herausbefördert.

### Beispiel

In eine geöffnete Spritzgußkammer in der Form einer Airbagabdeckung im Lenkrad eines Personenkraftwagens mit einem Gesamtvolumen von 5 Volumeneinheiten wurde als Kunststoffmaterial Polyesterelastomer bei einer Schmelzetemperatur von 240 °C eingefüllt. Die Temperatur des Werkzeuges wurde bei 40 °C fixiert. Danach wurde die Spritzgußkammer unverzüglich geschlossen. Nach Abkühlen über eine Zeitdauer von 40 s wurde die Kammer wieder geöffnet und die Airbagabdeckung wurde herausgenommen.

Die fertige Airbagabdeckung wies mittig eine Aufreisslinie auf, in deren Bereich die Schichtdicke des Kunststoffs einen Wert von 0,4 mm hatte, während die übrige Schichtdicke der Airbagabdeckung 1,5 mm betrug. An der Oberseite der Airbagabdeckung, die dem Fahrzeuginnenraum zugewandt ist, war mit bloßem Auge kein Anzeichen auf den Verlauf der rückseitig befindlichen Aufreisslinie zu erkennen.

## Patentansprüche

1. Verfahren zum Herstellen von Airbagabdeckungen mit Aufreisslinie bei dem der Druck der Kunststoffschmelze gleichmäßig und schichtdickenunabhängig über die gesamte Airbagabdeckung hinweg verteilt wird, dadurch gekennzeichnet, dass zunächst der zu verarbeitende thermoplastische Kunststoff in einem Plastifizieraggregat schonend plastifiziert wird, dass der plastifizierte Kunststoff dann in eine geöffnete Kavität eingespritzt wird, dass dann die geöffnete Kavität geschlossen wird, wobei durch die vorgegebene Schließkraft und Schließgeschwindigkeit des Werkzeuges ein Prägedruck erzeugt wird, und dass nach Abkühlen die Kavität wieder geöffnet und die fertige Airbagabdeckung entnommen wird, wobei der Verlauf der Aufreisslinie auf der Oberseite der Airbagabdeckung, die dem Fahrgastraum zugewandt ist, optisch nicht erkennbar ist.

2. Verfahren nach Anspruch 1, dadurch gekennzeichnet, dass als Kavität ein mit thermostabilem Material ummantelter Hohlraum verwendet wird, der in seiner geometrischen Ausgestaltung die spätere Form der Airbagabdeckung vorgibt.

3. Verfahren nach Anspruch 2, dadurch gekennzeichnet, dass die Kavität von aussen mit einem Kühlmedium gekühlt wird.

4. Airbagabdeckung für Kraftfahrzeuge aus Kunststoff mit einer auf ihrer dem Fahrgastinnenraum abgewandten Unterseite angeordneten und als Dünnstelle ausgebildeten Aufreisslinie, dadurch gekennzeichnet, dass die Airbagabdeckung nach dem Spritzprägeverfahren hergestellt wurde und der Verlauf der Aufreisslinie auf der Oberseite der Airbagabdeckung, die dem Fahrgastinnenraum zugewandt ist, optisch nicht erkennbar ist.

5. Airbagabdeckung nach Anspruch 4 dadurch gekennzeichnet, dass die Airbagabdeckung aus einem oder mehreren thermoplastischen Elastomeren gefertigt ist.

6. Airbagabdeckung nach Anspruch 4 oder 5, dadurch gekennzeichnet, dass die Schichtdicke im Bereich der Aufreisslinie im Bereich von 0,1 mm bis 1,0 mm, vorzugsweise im Bereich von 0,3 mm bis 0,5 mm, liegt.

7. Verwendung eines Spritzprägeverfahrens, bei dem zunächst der zu verarbeitende thermoplastische Kunststoff in einem Plastifizieraggregat schonend plastifiziert wird, der plastifizierte Kunststoff in eine geöffnete Kavität eingespritzt wird, die geöffnete Kavität geschlossen wird, wobei durch die vorgegebene Schließkraft und Schließgeschwindigkeit des Werkzeuges ein Prägedruck erzeugt wird, und nach Abkühlen die Kavität wieder geöffnet und eine fertige Airbagabdeckung entnommen wird, zum Herstellen von Airbagabdeckungen mit Aufreisslinie.

8. Verwendung nach Anspruch 7, dadurch gekennzeichnet, dass die Aufreisslinie an der Oberseite der Airbagabdeckung, die dem Fahrgastinnenraum zugewandt ist, optisch nicht erkennbar ist.
